# FASCICULE DE BREVET EUROPEEN

(11) **EP 0 621 153 B1**
(45) Date de publication et mention de la délivrance du brevet: **30.10.1996**
(21) Numéro de dépôt: 94400785.5
(22) Date de dépôt: 12.04.1994
(51) Int. Cl.: B60K 15/04

(54) **Embout de remplissage d'un réservoir de carburant, en particulier pour véhicule automobile**
Einfüllstutzen für Kraftstofftank, insbesondere für Kraftfahrzeug
Filler pipe for fuel tank, especially for motor vehicle

(30) Priorité: 22.04.1993 FR 9304738
(43) Date de publication de la demande: 26.10.1994
(73) Titulaire: PAUL JOURNEE S.A., F-92700 Colombes (FR)
(72) Inventeur: Crepin, Christophe, F-95300 Pontoise (FR); Romanek, Christian, F-60430 Noailles (FR)
(74) Mandataire: Lemaire, Marc

(56) Documents cités:
- WO-A-85/02379
- DE-B- 2 358 735
- DE-U- 9 210 408
- FR-A- 2 173 587
- FR-A- 2 609 670
- FR-A- 2 633 224
- US-A- 4 822 054

## Description

La présente invention concerne un embout de remplissage d'un réservoir de carburant, en particulier pour véhicule automobile. Un tel embout comporte de manière connue un corps tubulaire de forme tronconique, et présente à son extrémité aval un volet mobile maintenu au repos en position d'obturation par un moyen élastique.

On se référera à titre d'état de la technique au brevet français FR-2.609.670. Ce brevet décrit un embout plus particulièrement adapté à la réglementation relative à l'essence sans plomb. Cet embout comporte un détrompeur pour éviter l'introduction d'un pistolet provenant d'une pompe délivrant un carburant non adapté au véhicule équipé dudit embout.

On connaît également le brevet FR-2.633.224 concernant un dispositif d'étanchéité pour tubulure de remplissage d'un réservoir, et décrivant une tubulure comportant un manchon conique fermé par un volet rabattable.

De tels embouts présentent toutefois l'inconvénient de provoquer des interruptions fréquentes de remplissage dues en particulier à une mauvaise position du pistolet de remplissage dans la tubulure qui provoque des reflux de carburant le long des parois de la tubulure et donc des déclenchements intempestifs dus à une détection de surpression par l'orifice du pistolet.

L'objet de la présente invention est de remédier à cet inconvénient et propose à cet effet un embout de remplissage d'un réservoir de carburant, en particulier pour véhicule automobile, du type comportant un corps tubulaire de forme tronconique, un ensemble de fixation pour la solidarisation avec l'embouchure de remplissage du réservoir, le corps tubulaire présentant à son extrémité aval un volet mobile maintenu au repos en position d'obturation par un moyen élastique, le corps tubulaire étant prolongé, en aval du volet mobile, par une gouttière semi-cylindrique dont l'axe de révolution prolonge l'axe longitudinal du corps tubulaire tronconique, caractérisé en ce que la gouttière présente une section en forme de demi-cercle de 180 degrés, la gouttière étant symétrique par rapport à un plan perpendiculaire à l'axe d'articulation du volet rabattable et passant par l'axe longitudinal du corps.

Cette gouttière semi-cylindrique empêche la venue en contact de l'extrémité du pistolet muni d'une prise de pression avec une paroi selon un angle susceptible de provoquer des turbulences, et donc des reflux à l'origine des déclenchements intempestifs.

Avantageusement, la gouttière présente à son extrémité aval une butée s'étendant transversalement.

Cette butée garantit le bon positionnement du pistolet dans la tubulure de remplissage.

Selon une première variante, la butée est constituée par un rebord s'étendant radialement vers le centre de courbure, le long du bord inférieur de la gouttière.

Selon une deuxième variante, la butée est constituée par une barrette transversale.

Selon une troisième variante, la butée est constituée par une couronne annulaire coaxiale avec l'axe de l'embout.

L'invention sera mieux comprise à la lecture de la description qui suit, faisant référence aux dessins annexés où:
- la figure 1 représente une vue en coupe transversale du dispositif selon l'invention;
- la figure 2 représente une coupe suivant la ligne A-A' de la figure 1.

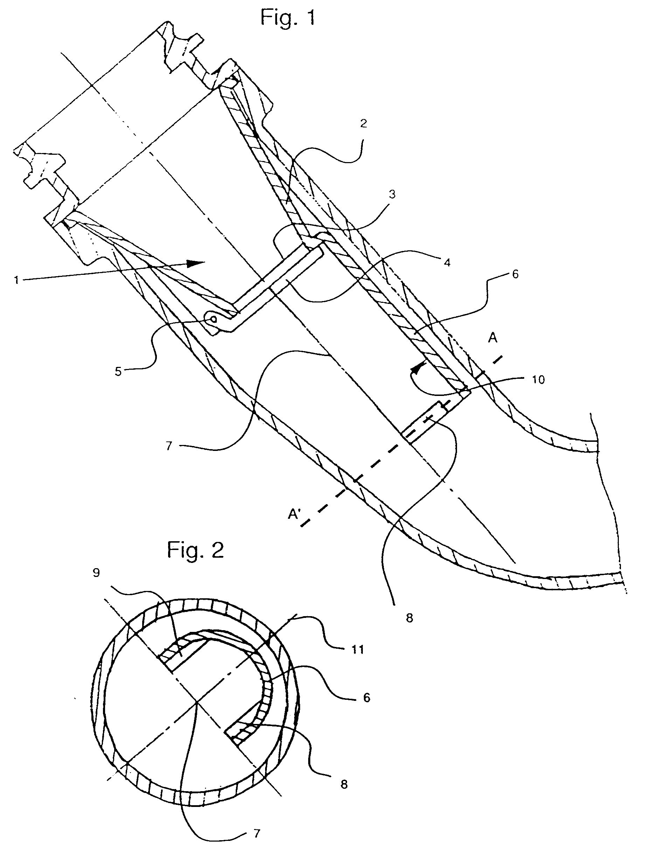

L'embout de remplissage 1 représenté en vue en coupe sur le figure 1, comporte un corps tubulaire 2, de forme tronconique présentant une extrémité aval 3 dont le diamètre intérieur est légèrement supérieur au diamètre extérieur du pistolet de remplissage (non représenté). Un volet mobile de fermeture 4 vient s'appliquer sur le fond de l'embout. Ce volet de fermeture 4 est monté articulé sur le corps tubulaire 2 autour d'un axe 5, et est rappelé en position de fermeture par un ressort (non représenté).

Le corps tubulaire 2 est prolongé en aval du volet mobile 4 par une gouttière 6 de forme semi-cylindrique, dont l'axe de révolution est confondu avec l'axe longitudinal 7 du corps tubulaire 2.

La gouttière 6 présente une section en forme de demi-cercle de 180 degrés de façon à permettre le basculement du volet de fermeture articulé 4.

Ladite gouttière 6 est globalement symétrique par rapport à un plan perpendiculaire à l'axe d'articulation 5 du volet de fermeture 4 et passant par l'axe longitudinal 7 du corps 2.

Ainsi qu'on peut le voir en particulier figure 2 la gouttière 6 présente à son extrémité aval, un rebord 8,9 faisant saillie par rapport à la surface intérieure 10 et formant une butée s'étendant transversalement.

Les rebords 8, 9 sont constitués par deux ailettes d'une épaisseur correspondant sensiblement à l'épaisseur de la paroi du pistolet de remplissage, s'étendant radialement vers l'axe longitudinal 7, symétriquement par rapport à l'axe de symétrie 11 de la gouttière 6, le long de son bord inférieur.

Le pistolet de remplissage est guidé lors de son introduction par le corps tronconique 2.

L'extrémité aval 3, de diamètre calibré, empêche pour tout pistolet délivrant un carburant inadapté au véhicule, le basculement du volet 4 et donc l'introduction de carburant dans le réservoir.

Cette particularité est indispensable pour les véhicules consommant de l'essence sans plomb, toute introduction d'un autre carburant pouvant amener la destruction de certains organes du véhicule tels que le pot d'échappement catalytique.

Un pistolet dont le diamètre est adapté repousse lors de son introduction le volet de fermeture 4 et est ensuite guidé par la gouttière 6, ou par la paroi opposée de la tubulure, dans une position se rapprochant de la position centrée. La limitation de l'inclinaison du pistolet par rapport à l'axe longitudinal 7 permet de réduire les situations de déclenchement intempestif survenant lors du reflux de carburant le long des parois en contact avec l'orifice de sortie du pistolet. La butée en forme d'ailette limite la pénétration du pistolet et empêche la venue en contact de la sortie du pistolet avec la partie coudée de la tubulure.

L'invention est décrite dans ce qui précède à titre d'exemple non limitatif. Il est bien entendu que l'Homme de Métier sera à même de réaliser différentes variantes, notamment en ce qui concerne la forme de la gouttière ou de la butée.

En particulier les ailettes 8,9 peuvent être remplacées par exemple par une barrette transversale ou une couronne annulaire coaxiale avec l'axe de l'embout sans pour cela sortir du cadre de l'invention.

## Revendications

1. Embout de remplissage d'un réservoir de carburant, en particulier pour véhicule automobile, du type comportant un corps (2) tubulaire de forme tronconique, un ensemble de fixation pour la solidarisation avec l'embouchure de remplissage du réservoir, le corps (2) tubulaire présentant à son extrémité aval (3) un volet (4) mobile maintenu au repos en position d'obturation par un moyen élastique, le corps (2) tubulaire étant prolongé, en aval du volet (4) mobile, par une gouttière (6) semi-cylindrique dont l'axe de révolution prolonge l'axe longitudinal (7) du corps (2) tubulaire tronconique, caractérisé en ce que ladite gouttière (6) présente une section en forme de demi-cercle de 180 degrés, ladite gouttière étant symétrique par rapport à un plan perpendiculaire à l'axe d'articulation (5) du volet (4) de fermeture et passant par l'axe longitudinal (7) du corps (2).

2. Embout de remplissage d'un réservoir de carburant selon la revendication 1, caractérisé en ce que la gouttière (6) présente à son extrémité aval une butée s'étendant transversalement.

3. Embout de remplissage d'un réservoir de carburant selon la revendication 2, caractérisé en ce que ladite butée est constituée par deux ailettes (8, 9) s'étendant radialement vers l'axe longitudinal (7), le long du bord inférieur de la gouttière (6).

4. Embout de remplissage d'un réservoir de carburant selon la revendication 2, caractérisé en ce que ladite butée est constituée par une barrette transversale.

5. Embout de remplissage d'un réservoir de carburant selon la revendication 2, caractérisé en ce que ladite butée est constituée par une couronne annulaire coaxiale avec l'axe de l'embout.

## Claims

1. Filler pipe for a fuel tank, in particular for a motor vehicle, of the type having a tapered tubular body (2), a fixing assembly for connection to the filling orifice of the tank, the tubular body (2) having at its downstream end (3) a movable flap (4) held at rest in the closure position by an elastic means, the tubular body (2) being extended, downstream of the movable flap (4), by a semi-cylindrical channel (6) whose axis of revolution extends the longitudinal axis (7) of the tapered tubular body (2), characterised in that the said channel (6) has a cross section in the shape of a semi-circle of 180 degrees, the said channel being symmetrical with respect to a plane perpendicular to the pivot axis (5) of the closure flap (4) and passing through the longitudinal axis (7) of the body (2).

2. Filler pipe for a fuel tank according to Claim 1, characterised in that the channel (6) has at its downstream end a stop extending transversely.

3. Filler pipe for a fuel tank according to Claim 2, characterised in that the said stop is formed by two wings (8, 9) extending radially towards the longitudinal axis (7), along the lower edge of the channel (6).

4. Filler pipe for a fuel tank according to Claim 2, characterised in that the said stop is formed by a transverse bar.

5. Filler pipe for a fuel tank according to Claim 2, characterised in that the said stop is formed by an annular ring coaxial with the axis of the pipe.

## Patentansprüche

1. Einfüllstutzen zu einem Kraftstofftank, insbesondere für Kraftfahrzeuge, umfassend einen kegelstumpfförmigen Rohrkörper (2) und eine Befestigungseinrichtung für die feste Verbindung mit dem Einfüllansatz des Kraftstofftanks, wobei der Rohrkörper (2) an seinem hinteren Ende (3) eine bewegliche Klappe (4) aufweist, die in Ruhestellung durch ein elastisches Mittel in Verschlußposition gehalten wird, wobei der Rohrkörper (2) hinter der beweglichen Klappe (4) durch eine halbzylindrische Rinne (6) verlängert wird, deren Drehachse die Längsachse (7) des kegelstumpfförmigen Rohrkörpers (2) verlängert , **dadurch gekennzeichnet**, daß die besagte Rinne (6) einen halbkreisförmigen Querschnitt von 180 Grad aufweist, wobei die besagte Rinne symmetrisch im Verhältnis zu einer Ebene ausgeführt ist, die senkrecht zur Schwenkachse (5) der Verschlußklappe (4) und durch die Längsachse (7) des Rohrkörpers (2) verläuft.

2. Einfüllstutzen zu einem Kraftstofftank nach Anspruch 1, **dadurch gekennzeichnet**, daß die Rinne (6) an ihrem hinteren Ende einen Anschlag aufweist, der sich in Querrichtung erstreckt.

3. Einfüllstutzen zu einem Kraftstofftank nach Anspruch 2, **dadurch gekennzeichnet,** daß der besagte Anschlag aus zwei Rippen (8, 9) besteht, die sich radial zur Längsachse (7) entlang der Unterkante der Rinne (6) erstrecken.

4. Einfüllstutzen zu einem Kraftstofftank nach Anspruch 2, **dadurch gekennzeichnet**, daß der besagte Anschlag aus einem Quersteg besteht.

5. Einfüllstutzen zu einem Kraftstofftank nach Anspruch 2, **dadurch gekennzeichnet**, daß der besagte Anschlag aus einem ringförmigen Kranz besteht, der koaxial mit der Achse des Einfüllstutzens verläuft.
